# EUROPEAN PATENT APPLICATION

(11) **EP 4 525 419 A1**
(43) Date of publication of application: **19.03.2025**
(21) Application number: 23824299.4
(22) Date of filing: 16.06.2023
(51) Int. Cl.: H04M 1/03, G06F 1/16, H05K 5/00, H05K 5/06, H04M 1/02

(54) **ELECTRONIC DEVICE INCLUDING RESONANT SPACE FOR AUDIO SIGNAL**

(30) Priority: 17.06.2022 KR 20220074175; 20.09.2022 KR 20220118955
(71) Applicant: Samsung Electronics Co., Ltd., Suwon-si, Gyeonggi-do 16677 (KR)
(72) Inventor: SIM, Myoungsung, Suwon-si Gyeonggi-do 16677 (KR); CHO, Woojin, Suwon-si Gyeonggi-do 16677 (KR); PARK, Youngbae, Suwon-si Gyeonggi-do 16677 (KR); BAEK, Incheol, Suwon-si Gyeonggi-do 16677 (KR); KIM, Kiwon, Suwon-si Gyeonggi-do 16677 (KR); SONG, Jihoon, Suwon-si Gyeonggi-do 16677 (KR); CHO, Joonrae, Suwon-si Gyeonggi-do 16677 (KR); LEE, Byounghee, Suwon-si Gyeonggi-do 16677 (KR); HWANG, Hochul, Suwon-si Gyeonggi-do 16677 (KR)
(74) Representative: HGF
(86) International application number: PCT/KR2023/008408
(87) International publication number: WO 2023/244087

(57) **Abstract**

An electronic device according to an embodiment includes a housing, a supporting structure, a speaker including one surface and another surface, a support in contact with a portion of another surface of the speaker, and a sealing sheet provided between the support and the second surface. The support includes: a first portion that is in contact with another surface of the speaker and spaced apart from the sealing sheet; and a second portion that is in contact with the sealing sheet and spaced apart from another surface of the speaker. A first space between the sealing sheet and the first portion is connected to a second space between another surface of the speaker and the second portion via a through-hole of the supporting structure arranged with respect to the one surface of the speaker, thereby forming a resonance space for an audio signal transmitted from the one surface of the speaker toward a speaker hole of the third side. Various other embodiments may also be possible.

## Description

### [Technical Field]

Various embodiments of the present disclosure relate to an electronic device including a resonance space of an audio signal.

### [Background Art]

An electronic device may include a speaker for providing an audio signal. The audio signal may be transmitted from the inside of a housing to the outside via the speaker.

The audio signal may cause a resonance phenomenon that vibrates at a specific frequency. The audio signal may have a register distinguished according to a frequency. Since an audio signal in a low register having a relatively low frequency has a relatively long wavelength, a relatively large space may be required to cause the resonance phenomenon.

### [Disclosure]

### [Technical Problem]

According to a trend of an electronic device becoming smaller and thinner, a size and thickness of a housing of the electronic device are decreasing. As the size and thickness of the housing decrease, a space for various electronic components disposed in the housing may be narrow.

An audio signal provided from the electronic device may be transmitted to the outside of the housing via a speaker. A sound wave outputted from the speaker may resonate in a space in the housing. The speaker may be pressed by a support in order to be firmly in close contact with a designated position. Due to a volume occupied by the support, a resonance space of the sound wave outputted from the speaker may be insufficient. In case that the resonance space is insufficient, quality of an audio signal in a relatively low register may be deteriorated.

In an electronic device according to various embodiments, the resonance space of the sound wave outputted from the speaker may be expanded by including the resonance space in a portion of the support.

The technical problems to be achieved in this document are not limited to those described above, and other technical problems not mentioned herein will be clearly understood by those having ordinary knowledge in the art to which the present disclosure belongs, from the following description.

### [Technical Solution]

An electronic device according to an embodiment may include a housing, a supporting structure, a speaker, a support, and a sealing sheet. The housing may include a first surface, a second surface opposite to the first surface, and a third surface between the first surface and the second surface. The supporting structure may be spaced apart from the first surface. The speaker may include a surface and another surface. The surface may be at least partially contacted with a portion of the supporting structure. The other surface may be opposite to the surface of the speaker. The support may be contacted with a portion of the other surface of the speaker. The sealing sheet may be interposed between the support and the second surface of the housing. The support may include a first portion and a second portion. The first portion may be contacted with the other surface of the speaker. The support may be spaced apart from the sealing sheet. The second portion may be contacted with the sealing sheet. The second portion may be spaced apart from the other surface of the speaker. A first space between the sealing sheet and the first portion of the support, may be connected to a second space between the other surface of the speaker and the second portion of the support, for a resonant space for audio signals transmitted from the surface of the speaker toward a speaker hole of the third surface of the housing, via a through hole of the supporting structure arranged with respect to the surface of the speaker.

An electronic device according to an embodiment may include a housing, a speaker module, and a sealing sheet. The housing may include a first plate, a second plate, and a frame structure. The second plate may be opposite to the first plate. The frame structure may include a side wall and a supporting portion. The side wall may be disposed between the first plate and the second plate. The supporting portion may extend from the side wall. The speaker module may be disposed, between the second plate and the supporting portion, on the supporting portion. The sealing sheet may seal a space between the speaker module and a mechanical structure of the housing. The speaker module may include a first encloser, a speaker, and a second encloser. The first encloser may be disposed on the supporting portion. The speaker may include a surface and another surface. The surface may partially contact a portion of the first encloser. The other surface may be opposite to the surface. The second encloser may be coupled to the first encloser. The second encloser may be disposed between the first encloser and the second plate to form a first space surrounding the other surface of the speaker. The second encloser may include an opening exposing the first space. The first space may be connected to a second space surrounded by the second encloser, the mechanical structure, and a sealing member for a resonance space for an audio signal outputted from the speaker.

### [Advantageous Effects]

In an electronic device according to an embodiment, a resonance space of a sound wave outputted from a speaker can be expanded by including a space for expanding the resonance space in a support. By expanding the resonance space, quality of an audio signal provided from the speaker can be improved.

The effects that can be obtained from the present disclosure are not limited to those described above, and any other effects not mentioned herein will be clearly understood by those having ordinary knowledge in the art to which the present disclosure belongs, from the following description.

### [Description of the Drawings]

FIG. 1 is a block diagram of an electronic device in a network environment according to various embodiments.
FIG. 2 is a diagram illustrating an electronic device according to an embodiment.
FIG. 3 is an exploded perspective view of an electronic device according to an embodiment.
FIG. 4A is a diagram illustrating a portion of a rear surface of an electronic device according to an embodiment.
FIG. 4B is a cross-sectional view of an electronic device according to an embodiment cut along line A-A' of FIG. 4A .
FIG. 5A is a diagram illustrating a speaker module according to an embodiment.
FIG. 5B is an exploded perspective view of FIG. 5A.
FIG. 5C is a cross-sectional view cut along line B-B' of FIG. 5A.
FIG. 6A is a diagram illustrating a support and a sheet according to an embodiment.
FIG. 6B is a diagram illustrating a rear surface of a support according to an embodiment.
FIG. 7A is a diagram illustrating an example of a speaker and a support according to an embodiment.
FIG. 7B is a diagram illustrating a side surface of the speaker and the support of FIG. 7A.
FIG. 8A is a diagram illustrating an example of a speaker, a support, and an elastic body according to an embodiment.
FIG. 8B is a diagram illustrating a side surface of the speaker, the support, and the elastic body of FIG. 8A.
FIG. 9A is a diagram illustrating an example of a speaker and an elastic body according to an embodiment.
FIG. 9B is a diagram illustrating a side surface of the speaker and the elastic body of FIG. 9A.
FIG. 10A is a diagram illustrating a portion of a rear surface of an electronic device according to an embodiment.
FIG. 10B is a cross-sectional view of an electronic device according to an embodiment cut along line C-C' of FIG. 10A.
FIG. 11A is a diagram illustrating a speaker module of an electronic device according to an embodiment.
FIG. 11B is an exploded perspective view of a portion of the speaker module of FIG. 11A according to an embodiment.
FIG. 11C is a cross-sectional view of an electronic device in which the speaker module of FIG. 11A is disposed, cut along line D-D' of FIG. 2.
FIG. 12 is a graph for indicating a change in an output sound pressure level of a speaker, in case that a resonance space is expanded according to an embodiment.

### [Mode for Invention]

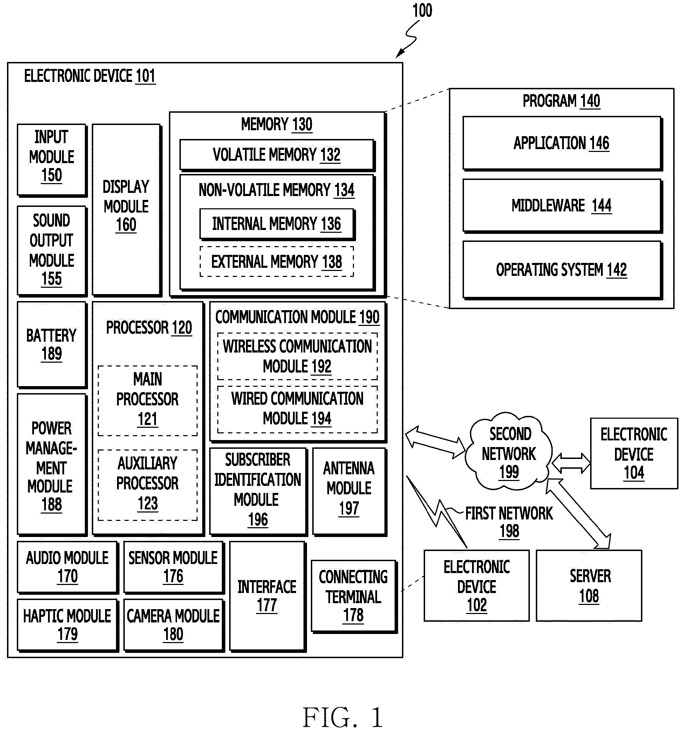

FIG. 1 is a block diagram illustrating an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

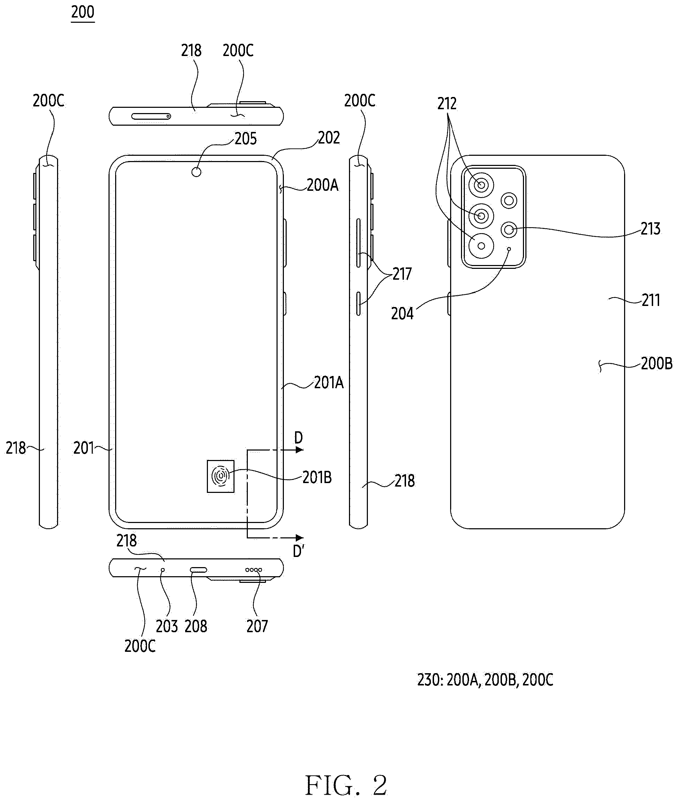

FIG. 2 is a diagram illustrating an electronic device according to an embodiment.

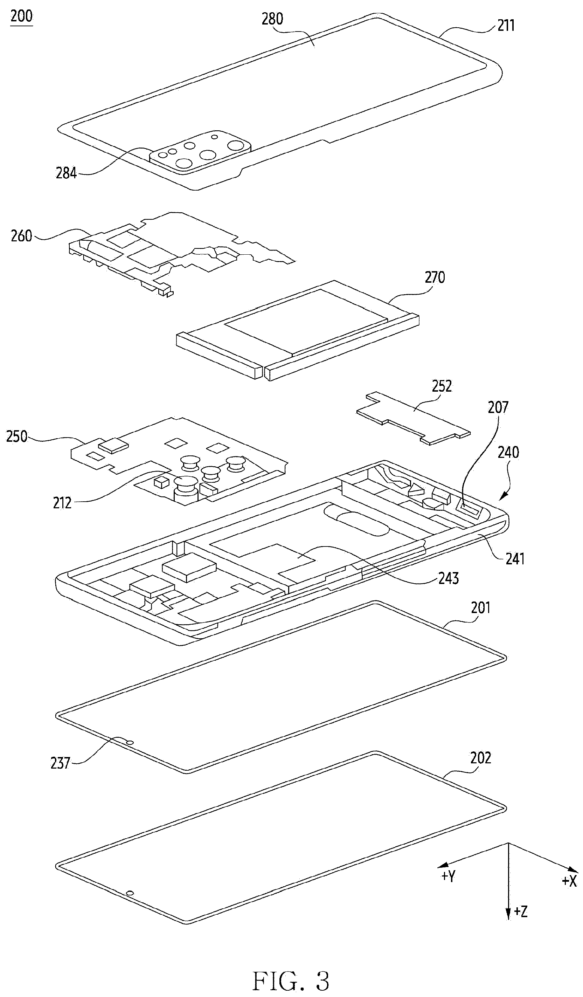

Referring to FIG. 2, an electronic device 200 according to an embodiment may include a housing 230 forming an exterior of the electronic device 200. For example, the housing 230 may include a first surface (or a front surface) 200A, a second surface (or a rear surface) 200B, and a third surface (or a side surface) 200C surrounding a space between the first surface 200A and the second surface 200B. In an embodiment, the housing 230 may refer to a structure (e.g., a frame structure 240 of FIG. 3) forming at least a portion of the first surface 200A, the second surface 200B, and/or the third surface 200C.

The electronic device 200 according to an embodiment may include a substantially transparent front plate 202. In an embodiment, the front plate 202 may form at least a portion of the first surface 200A. In an embodiment, the front plate 202 may include, for example, a glass plate or a polymer plate including various coating layers, but is not limited thereto.

The electronic device 200 according to an embodiment may include a substantially opaque rear plate 211. In an embodiment, the rear plate 211 may form at least a portion of the second surface 200B. In an embodiment, the rear plate 211 may be formed by coated or colored glass, a ceramic, a polymer, a metal (e.g., aluminum, stainless steel (STS), or magnesium), or a combination of at least two of the materials.

The electronic device 200 according to an embodiment may include a side bezel structure (or a side member) 218 (e.g., a side wall 241 of a frame structure 240 of FIG. 3). In an embodiment, the side bezel structure 218 may be coupled to the front plate 202 and/or the rear plate 211 to form at least a portion of the third surface 200C of the electronic device 200. For example, the side bezel structure 218 may form entire third surface 200C of the electronic device 200, and for another example, the side bezel structure 218 may form the third surface 200C of the electronic device 200 together with the front plate 202 and/or the rear plate 211.

Unlike the illustrated embodiment, in case that the third surface 200C of the electronic device 200 is partially formed by the front plate 202 and/or the rear plate 211, the front plate 202 and/or the rear plate 211 may include a region that is bent toward the rear plate 211 and/or the front plate 202 from a periphery portion thereof and seamlessly extends. The extending region of the front plate 202 and/or the rear plate 211 may be located, for example, at both ends of a long edge of the electronic device 200, but is not limited by the above-described example.

In an embodiment, the side bezel structure 218 may include a metal and/or a polymer. In an embodiment, the rear plate 211 and the side bezel structure 218 may be integrally formed and may include the same material (e.g., a metallic material such as aluminum), but is not limited thereto. For example, the rear plate 211 and the side bezel structure 218 may be formed in a separate configuration and/or may include different materials.

In an embodiment, the electronic device 200 may include at least one of a display 201, audio modules 203, 204, and 207, a sensor module (not illustrated), camera modules 205, 212, and 213, a key input device 217, a light emitting element (not illustrated), and/or a connector hole 208. In another embodiment, the electronic device 200 may omit at least one (e.g., the key input device 217 or the light emitting element (not illustrated)) of the components, or may additionally include another component.

In an embodiment, the display 201 (e.g., the display module 160 of FIG. 1) may be visually exposed via a significant portion of the front plate 202. For example, at least a portion of the display 201 may be seen via the front plate 202 forming the first surface 200A. In an embodiment, the display 201 may be disposed on a back surface of the front plate 202.

In an embodiment, an outer periphery shape of the display 201 may be formed substantially the same as an outer periphery shape of the front plate 202 adjacent to the display 201. In an embodiment, in order to expand an area in which the display 201 is visually exposed, a distance between an outer periphery of the display 201 and an outer periphery of the front plate 202 may be formed substantially the same.

In an embodiment, the display 201 (or the first surface 200A of the electronic device 200) may include a screen display region 201A. In an embodiment, the display 201 may provide visual information to a user via the screen display region 201A. In the illustrated embodiment, when the first surface 200A is viewed from the front, it is described that the screen display region 201A is spaced apart from an outer periphery of the first surface 200A and is located inside the first surface 200A, but is not limited thereto. In another embodiment, when the first surface 200A is viewed from the front, at least a portion of a periphery of the screen display region 201A may substantially coincide with the periphery of the first surface 200A (or the front plate 202).

In an embodiment, the screen display region 201A may include a sensing region 201B configured to obtain user's biometric information. Herein, a meaning of "the screen display region 201A includes the sensing region 201B" may be understood to mean that at least a portion of the sensing region 201B may be overlapped with the screen display region 201A. For example, the sensing region 201B may mean a region capable of displaying visual information by the display 201, like other regions of the screen display region 201A, and additionally obtaining the user's biometric information (e.g., a fingerprint). In another embodiment, the sensing region 201B may be formed in the key input device 217.

In an embodiment, the display 201 may include a region in which the first camera module 205 (e.g., the camera module 180 of FIG. 1) is located. In an embodiment, an opening may be formed in the region of the display 201, and the first camera module 205 (e.g., a punch hole camera) may be at least partially disposed in the opening to face the first surface 200A. In this case, the screen display region 201A may surround at least a portion of a periphery of the opening. In another embodiment, the first camera module 205 (e.g., an under display camera (UDC)) may be disposed under the display 201 to overlap the region of the display 201. In this case, the display 201 may provide visual information to a user via the region, and additionally, the first camera module 205 may obtain an image corresponding to a direction toward the first surface 200A via the region of the display 201.

In an embodiment, the display 201 may be coupled to or disposed adjacent to a touch sensing circuit, a pressure sensor capable of measuring intensity (pressure) of a touch, and/or a digitizer that detects a magnetic field type stylus pen.

In an embodiment, the audio modules 203, 204, and 207 (e.g., the audio module 170 of FIG. 1) may include microphone holes 203 and 204, and a speaker hole 207.

In an embodiment, the microphone holes 203 and 204 may include a first microphone hole 203 formed in a partial region of the third surface 200C and a second microphone hole 204 formed in a partial region of the second surface 200B. A microphone (not illustrated) for obtaining external sound may be disposed inside the microphone holes 203 and 204. The microphone may include a plurality of microphones to sense a direction of the sound.

In an embodiment, the second microphone hole 204 formed in a partial region of the second surface 200B may be disposed adjacent to the camera modules 205, 212, and 213. For example, the second microphone hole 204 may obtain a sound according to an operation of the camera modules 205, 212, and 213. However, it is not limited thereto.

In an embodiment, the speaker hole 207 may include an external speaker hole 207 and a call receiver hole (not illustrated). The external speaker hole 207 may be formed in a portion of the third surface 200C of the electronic device 200. In another embodiment, the external speaker hole 207 may be implemented as one hole with the microphone hole 203. Although not illustrated, the call receiver hole (not illustrated) may be formed on another portion of the third surface 200C. For example, the call receiver hole may be formed on an opposite side of the external speaker hole 207 on the third surface 200C. For example, based on the illustration of FIG. 2, the external speaker hole 207 may be formed on the third surface 200C corresponding to a lower portion of the electronic device 200, and the call receiver hole may be formed on the third surface 200C corresponding to an upper portion of the electronic device 200. However, it is not limited thereto, and in another embodiment, the call receiver hole may be formed at a position other than the third surface 200C. For example, the call receiver hole may be formed by a space separated between the front plate 202 (or the display 201) and the side bezel structure 218.

In an embodiment, the electronic device 200 may include at least one speaker (not illustrated) configured to output sound to the outside of the housing 230 via the external speaker hole 207 and/or the call receiver hole (not illustrated).

In an embodiment, the sensor module (not illustrated) (e.g., the sensor module 176 of FIG. 1) may generate an electrical signal or a data value corresponding to an internal operating state the electronic device 200 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

In an embodiment, the camera modules 205, 212, and 213 (e.g., the camera module 180 of FIG. 1) may include the first camera module 205 disposed to face the first surface 200A of the electronic device 200, the second camera module 212 disposed to face the second surface 200B, and the flash 213.

In an embodiment, the second camera module 212 may include a plurality of cameras (e.g., a dual camera, a triple camera, or a quad camera). However, the second camera module 212 is not necessarily limited to including a plurality of cameras, and may include one camera.

In an embodiment, the first camera module 205 and the second camera module 212 may include one or a plurality of lenses, an image sensor, and/or an image signal processor.

In an embodiment, the flash 213 may include, for example, a light emitting diode or a xenon lamp. In another embodiment, two or more lenses (an infrared camera, a wide-angle and telephoto lens) and the image sensors may be disposed on a surface of the electronic device 200.

In an embodiment, the key input device 217 (e.g., the input module 150 of FIG. 1) may be disposed on the third surface 200C of the electronic device 200. In another embodiment, the electronic device 200 may not include some or all of the key input devices 217, and the excluded key input device 217 may be implemented in another form, such as a soft key, on the display 201.

In an embodiment, the connector hole 208 may be formed on the third surface 200C of the electronic device 200 to accommodate a connector of an external device. A connection terminal (e.g., the connection terminal 178 of FIG. 1) electrically connected to a connector of the external device may be disposed in the connector hole 208. The electronic device 200 according to an embodiment may include an interface module (e.g., the interface 177 of FIG. 1) for processing an electrical signal transmitted and received via the connection terminal.

According to an embodiment, the electronic device 200 may include the light emitting element (not illustrated). For example, the light emitting element (not illustrated) may be disposed on the first surface 200A of the housing 230. The light emitting element (not illustrated) may provide state information of the electronic device 200 in an optical form. In another embodiment, the light emitting element (not illustrated) may provide a light source in conjunction with an operation of the first camera module 205. For example, the light emitting element (not illustrated) may include an LED, an IR LED, and/or the xenon lamp.

FIG. 3 is an exploded perspective view of an electronic device according to an embodiment.

Hereinafter, an overlapping description of a configuration having the same reference numeral as the above-described configuration will be omitted.

Referring to FIG. 3, an electronic device 200 according to an embodiment may include a frame structure 240, a first printed circuit board 250, a second printed circuit board 252, a cover plate 260, and a battery 270.

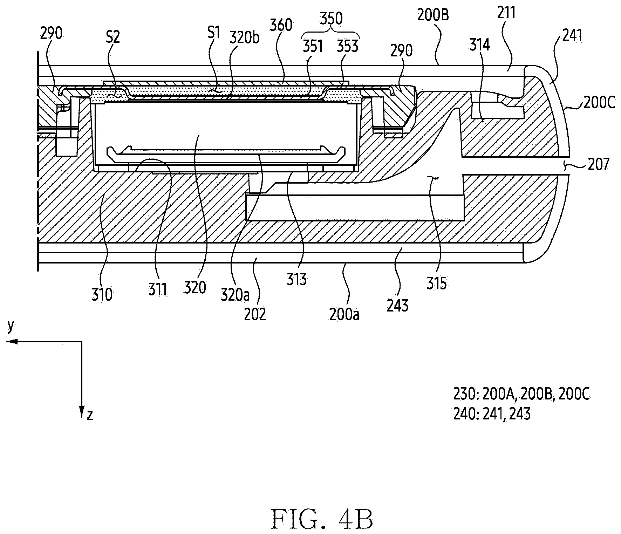

In an embodiment, the frame structure 240 may include a side wall 241 forming an exterior (e.g., the third surface 200C of FIG. 2) of the electronic device 200 and a supporting portion 243 extending inward from the side wall 241. In an embodiment, the frame structure 240 may be disposed between a display 201 and a rear plate 211. In an embodiment, the side wall 241 of the frame structure 240 may surround a space between the rear plate 211 and a front plate 202 (and/or the display 201), and the supporting portion 243 of the frame structure 240 may extend from the side wall 241 within the space. According to an embodiment, the side wall 241 forming a side surface (e.g., the side surface 200C of FIG. 2) of the electronic device 200 may include a speaker hole 207 connecting the inside and the outside of the electronic device 200. The speaker hole 207 may penetrate the side wall 241. An audio signal outputted from a speaker (e.g., a speaker 320 of FIG. 4B) disposed inside the electronic device 200 may be transmitted to the outside of the electronic device 200 via the speaker hole 207.

In an embodiment, the frame structure 240 may support or accommodate other components included in the electronic device 200. For example, the display 201 may be disposed on a surface of the frame structure 240 facing a direction (e.g., a +z direction), and the display 201 may be supported by the supporting portion 243 of the frame structure 240. For another example, the first printed circuit board 250, the second printed circuit board 252, the battery 270, and a second camera module 212 may be disposed on another surface of the frame structure 240 facing a direction (e.g., a -z direction) opposite to the direction. The first printed circuit board 250, the second printed circuit board 252, the battery 270, and the second camera module 212 may be respectively seated in a recess defined by the side wall 241 and/or the supporting portion 243 of the frame structure 240.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed in the frame structure 240 via a coupling member such as a screw. For example, the battery 270 may be fixedly disposed in the frame structure 240 via an adhesive member (e.g., a double-sided tape). However, it is not limited by the above-described example.

In an embodiment, the cover plate 260 may be disposed between the first printed circuit board 250 and the rear plate 211. In an embodiment, the cover plate 260 may be disposed on the first printed circuit board 250. For example, the cover plate 260 may be disposed on a surface facing the -z direction of the first printed circuit board 250.

In an embodiment, the cover plate 260 may at least partially overlap the first printed circuit board 250 with respect to the z-axis. In an embodiment, the cover plate 260 may cover at least a partial region of the first printed circuit board 250. Accordingly, the cover plate 260 may protect the first printed circuit board 250 from a physical impact or prevent detachment of a connector coupled to the first printed circuit board 250.

In an embodiment, the cover plate 260 may be fixedly disposed on the first printed circuit board 250 via the coupling member (e.g., the screw), or may be coupled to the frame structure 240 together with the first printed circuit board 250 via the coupling member.

In an embodiment, the display 201 may be disposed between the frame structure 240 and the front plate 202. For example, a front plate 202 may be disposed on a side (e.g., the +z direction) of the display 201, and a frame structure 240 may be disposed on another side (e.g., the -z direction).

In an embodiment, the front plate 202 may be coupled to the display 201. For example, the front plate 202 and the display 201 may be adhered to each other via an optical adhesive member (e.g., an optically clear adhesive (OCA) or an optically clear resin (OCR)) interposed therebetween.

In an embodiment, the front plate 202 may be coupled to the frame structure 240. For example, the front plate 202 may include an outer periphery portion extending outside the display 201 when viewed in the z-axis direction, and may be attached to the frame structure 240 via the adhesive member (e.g., the double-sided tape) disposed between the outer periphery portion of the front plate 202 and the frame structure 240 (e.g., the side wall 241). However, it is not limited by the above-described example.

In an embodiment, the first printed circuit board 250 and/or the second printed circuit board 252 may be equipped with a processor (e.g., the processor 120 of FIG. 1), a memory (e.g., the memory 130 of FIG. 1), and/or an interface (e.g., the interface 177 of FIG. 1). The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operatively or electrically connected to each other via a connection member (e.g., a flexible printed circuit board).

In an embodiment, the battery 270 (e.g., the battery 189 of FIG. 1) may supply power to at least one component of the electronic device 200. For example, the battery 270 may include a rechargeable secondary battery or a fuel cell. At least a portion of the battery 270 may be disposed on substantially a same plane as the first printed circuit board 250 and/or the second printed circuit board 252.

The electronic device 200 according to an embodiment may include an antenna module (not illustrated) (e.g., the antenna module 197 of FIG. 1). In an embodiment, the antenna module may be disposed between the rear plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power to and from the external device.

In an embodiment, the first camera module 205 (e.g., a front camera) may be disposed on at least a portion (e.g., the supporting portion 243) of the frame structure 240 so that the lens may receive external light via a partial region (e.g., a camera region 237) of the front plate 202 (e.g., the front surface 200A of FIG. 2).

In an embodiment, the second camera module 212 (e.g., a rear camera) may be disposed between the frame structure 240 and the rear plate 211. In an embodiment, the second camera module 212 may be electrically connected to the first printed circuit board 250 via a connection member (e.g., a connector). In an embodiment, the second camera module 212 may be disposed so that the lens may receive the external light via a camera region 284 of the rear plate 211 of the electronic device 200.

In an embodiment, the camera region 284 may be formed on a surface (e.g., the rear surface 200B of FIG. 2) of the rear plate 211. In an embodiment, the camera region 284 may be formed at least partially transparent so that external light may be incident to the lens of the second camera module 212. In an embodiment, at least a portion of the camera region 284 may protrude from the surface of the rear plate 211 by a predetermined height. However, it is not limited to it, and in another embodiment, the camera region 284 may form substantially the same plane as the surface of the rear plate 211.

In an embodiment, a housing 230 of the electronic device 200 may mean a configuration or a structure forming at least a portion of the exterior of the electronic device 200. In this regard, at least a portion of the front plate 202, the frame structure 240, and/or the rear plate 211 forming the exterior of the electronic device 200 may be referred to as the housing 230 of the electronic device 200.

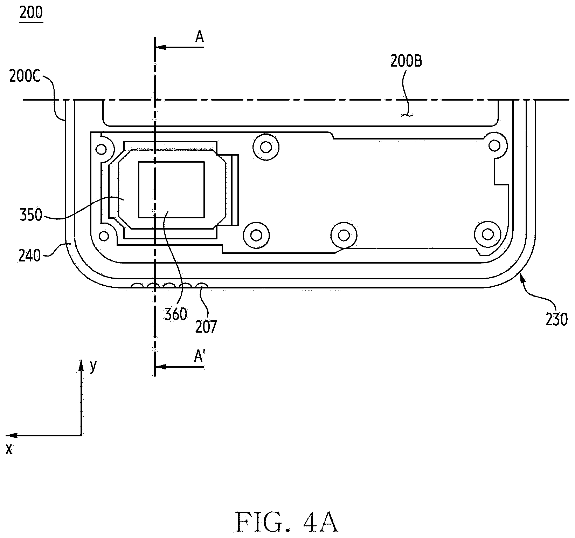

FIG. 4A is a diagram illustrating a portion of a rear surface of an electronic device according to an embodiment. FIG. 4B is a cross-sectional view of an electronic device according to an embodiment cut along line A-A' of FIG. 4A.

FIG. 4A is a diagram in which a rear plate (e.g., the rear plate 211 of FIG. 2) of the electronic device is omitted.

Referring to FIGS. 4A and 4B, an electronic device 200 according to an embodiment may include a housing 230, a supporting structure 310, a speaker 320, a support 350, and a sealing sheet 360.

According to an embodiment, the electronic device 200 may include the housing 230 forming an exterior of the electronic device 200. The housing 230 may include a first surface 200A, a second surface 200B opposite the first surface 200A, and a third surface 200C between the first surface 200A and the second surface 200B. The housing 230 may form an inner space of the electronic device 200. Various components (e.g., a battery, a camera, and a printed circuit board) of the electronic device 200 may be disposed in the inner space formed by the housing 230. The housing 230 may be referred to as the housing 230 of FIG. 2.

According to an embodiment, the supporting structure 310 may be spaced apart from the first surface 200A. Referring to FIG. 4B, the supporting structure 310 may be spaced apart from the first surface 200A in a -z direction. The supporting structure 310 may be a portion of the housing 230. For example, the supporting structure 310 may be referred to as a supporting portion (e.g., the supporting portion 243 of FIG. 3) extending from the side wall 241 forming the side surface 200C of the housing 230 toward the inside of the housing 230. However, it is not limited thereto. For example, the supporting structure 310 may be a separate component disposed inside the housing 230.

According to an embodiment, the speaker 320 may be configured to output an audio signal. For example, the speaker 320 may include a diaphragm, at least one voice coil that provides a vibration to the diaphragm, and a permanent magnet capable of forming a magnetic field. When a current having audio information flows via the voice coil, the diaphragm may vibrate. The speaker 320 may output an audio signal by the vibration.

According to an embodiment, a surface 320a of the speaker 320 may face the first surface 200A. Another surface 320b opposite to the surface 320a may face the second surface 200B. The surface 320a may be contacted with a portion (e.g., a seating portion 311) of the supporting structure 310.

According to an embodiment, the supporting structure 310 may include the seating portion 311 in which the speaker 320 is disposed. For example, the speaker 320 may be disposed in the seating portion 311. For example, the speaker 320 may be inserted (e.g., forced inserting) into the seating portion 311 or fixed to the seating portion 311 via an adhesive member.

According to an embodiment, the supporting structure 310 may be a portion of the housing 230 integrally formed with the housing 230. Referring to FIG. 4B, the housing 230 may include a first plate 202 forming the first surface 200A, a second plate 211 forming a second surface, and a frame structure 240 forming the third surface 200C between the first surface 200A and the second surface 200B. The frame structure 240 may be disposed between the first plate 202 and the second plate 211. The frame structure 240 may include a side wall 241 forming an inner space together with the first plate 202 and the second plate 211, and a supporting portion 243 extending from the side wall 241 to the inner space. For example, the supporting structure 310 may be integrated with the supporting portion 243 extending from the frame structure 240 into the housing 230. The supporting structure 310 may include a protrusion 314 extending toward a speaker hole 207.

According to an embodiment, the support 350 may be contacted with a portion of the other surface 320b of the speaker 320. The support 350 may be disposed between the speaker 320 and the second surface 200B. The support 350 may be configured to press a portion of the other surface 320b. According to an embodiment, the support 350 may be configured to press the other surface 320b of the speaker 320 by bonding force between the second plate 211 and the frame structure 240. For example, a portion of the support 350 may be configured to be contacted with the speaker 320, and another portion of the support 350 may be configured to be pressed by the second plate 211. By the bonding force between the second plate 211 and the frame structure 240, the support 350 may be configured to press the speaker 320 in a direction (e.g., a +z direction) toward the first surface 200A. The support 350 may enable a contact surface (e.g., the surface 320a) of the speaker 320, which is contacted with the seating portion 311, to be contacted with the seating portion 311 without a gap. When the audio signal is outputted from the speaker 320, the support 350 may reduce a noise generated by collisions between the speaker 320 and the supporting structure 310, and/or a mechanical structure 290 in the housing 230, by fixing the speaker 320 to the seating portion 311.

According to an embodiment, the sealing sheet 360 may be interposed between the support 350 and the second surface 200B. The sealing sheet 360 may surround a first space S1 described later by covering a first portion 351 of the support 350.

According to an embodiment, the support 350 may include the first portion 351 and a second portion 353. Referring to FIG. 4B, the first portion 351 may be contacted with the other surface 320b of the speaker 320. The first portion 351 may be spaced apart from the sealing sheet 360. The second portion 353 may be contacted with the sealing sheet 360. The second portion 353 may be spaced apart from the other surface 320b of the speaker 320. For example, the first portion 351 may be contacted with the other surface 320b of the speaker 320, and the second portion 353 may be spaced apart from the other surface 320b of the speaker 320 in a direction (e.g., the -z direction) toward the second surface 200B. The second portion 353 may be stepped with respect to the first portion 351. A portion of an end portion of the second portion 353 may be inserted into the mechanical structure 290 of the housing 230. The support 350 may be fixed via the second portion 353 inserted into the mechanical structure 290. As the first portion 351 and the second portion 353 are spaced apart from each other, the first space S1 may be formed between the first portion 351 and the second portion 353. The sealing sheet 360 may be interposed between the support 350 and the second surface 200B to cover the first space S1. The first space S1 may be surrounded by the sealing sheet 360 and the first portion 351.

According to an embodiment, the first space S1 may be connected to a second space S2. The second space S2 may be a space surrounding the other surface 320b of the speaker 320. For example, the second space S2 may be a space between the second portion 353 of the support 350 and the other surface 320b. However, it is not limited thereto. The audio signal outputted from the surface 320a of the speaker 320 may be transmitted to a duct 315 via a through hole 313 of the supporting structure 310 arranged on the surface 320a. The audio signal may be transmitted from the surface 320a toward the speaker hole 207 of the third surface 200C connected to the duct 315. The duct 315 may be formed inside the protrusion 314 extending toward the speaker hole 207.

For example, the audio signal may resonate within a space (e.g., a rear space) surrounding the other surface 320b of the speaker 320. The first space S1 may be connected to the second space S2 to expand a resonance space for the audio signal. As the first space S1 is connected to the second space S2, the resonance space for the audio signal may be expanded from the second space S2.

For example, the audio signal outputted from the speaker 320 may have a resonance frequency, resonating within the resonance space, based on a volume of the resonance space. For example, the speaker 320 may receive a signal including audio information from a processor (e.g., the processor 120 of FIG. 1). The speaker 320 may be configured to output the audio signal based on the signal received from the processor 120. For example, as the diaphragm vibrates, the audio signal may be outputted. The audio signal generated via the diaphragm may resonate via the resonance space. A resonant vibration frequency of the audio signal may be changed according to the volume of the resonant space. The Speaker 320 may provide the audio signal to a user, based on the resonance vibration frequency based on the volume of the resonance space.

For example, in order for the electronic device 200 to provide an audio signal having a resonance frequency within a designated frequency range, a certain volume of the resonance space may be required. Since the audio signal in a relatively low register has a smaller frequency than the signal in a relatively high register, a wavelength may be longer. In order to implement an audio in the relatively low register, the resonance space of the certain volume or more may be required. As the resonance space increase, quality of the audio in the lower register may be improved.

For example, in case that a support occupies the first space to support the other surface of the speaker, the resonance space of the audio signal may decrease according to the volume occupied by the support. As the volume of the resonance space decreases, the resonance space for an audio signal in the low register among the audio signal outputted from the speaker may be insufficient. In case that the resonance space is insufficient, quality and/or volume of the audio signal in the low register may be deteriorated.

According to an embodiment, the first space S1 and the second space S2 may be connected to each other for a resonance within a designated frequency range of the audio signal provided from the speaker 320. For example, the first space S1 may be emptied without being occupied by the support 350, due to the sealing sheet 360 that covers the first portion 351 and the second portion 353 spaced apart from each other, and the first space S1. As the first space S1 is connected to the second space S2, the resonance space may be expanded. According to an embodiment, the support 350 may not only press the speaker 320 to adhere the speaker 320 to the seating portion 311, but also form the first space S1 connected to the second space S2. In other words, the support 350 may expand the resonance space.

The electronic device 200 according to an embodiment may improve quality of the audio signal in the low register via the first space S1 and the second space S2 spatially connected to each other.

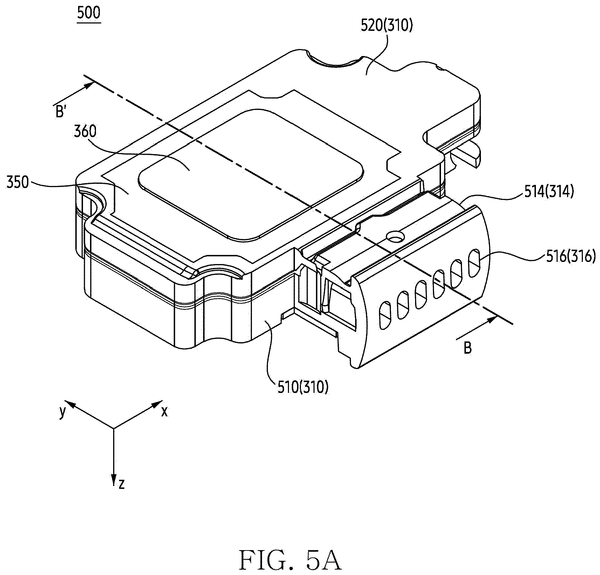

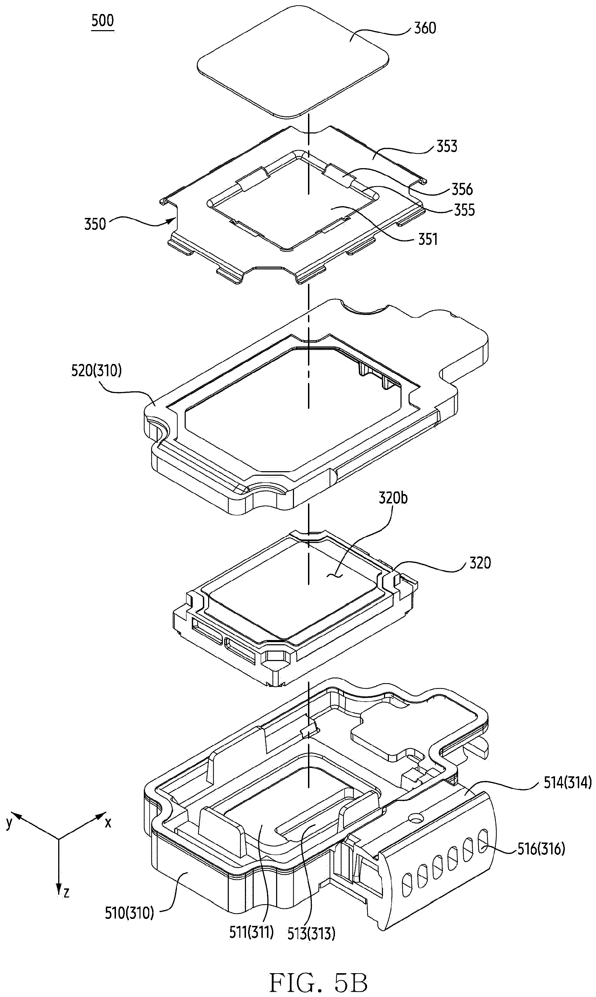

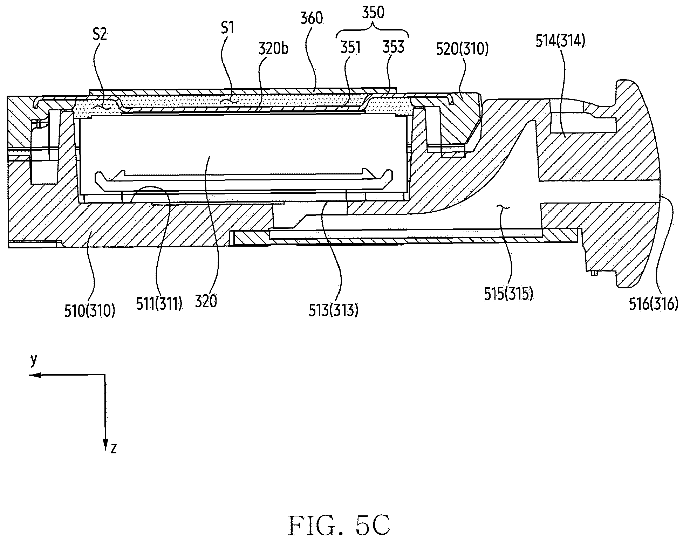

FIG. 5A is a diagram illustrating a speaker module according to an embodiment. FIG. 5B is an exploded perspective view of FIG. 5A. FIG. 5C is a cross-sectional view cut along line B-B' of FIG. 5A.

Referring to FIGS. 5A, 5B, and 5C, a speaker module 500 may include a first encloser 510, a second encloser 520, and a speaker 320. The first encloser 510 and the second encloser 520 may form an encloser surrounding the speaker 320. According to an embodiment, the first encloser 510 and the second encloser 520 may provide an inner space. The speaker 320 may be disposed in the inner space. According to an embodiment, the speaker module 500 including the first encloser 510, the speaker 320, and the second encloser 520 may be an electronic component capable of being disposed at a designated position within an electronic device (e.g., the electronic device 200 of FIG. 4A). For example, the electronic device 200 may include the speaker 320 disposed in an internal structure as illustrated in FIGS. 4A and 4B, or a module-type speaker module 500 surrounded in an encloser as illustrated in FIGS. 5A, 5B, and 5C.

For example, the first encloser 510 and the second encloser 520 may be distinguished from a housing 230. For example, in case that the electronic device 200 includes the speaker 320 of a type of the speaker module 500 surrounded by the first encloser 510 and the second encloser 520, the first encloser 510 and the second encloser 520 may be distinguished from the housing 230. In the above-described case, the first encloser 510 and the second encloser 520 surrounding the speaker 320 may be disposed on a supporting structure (e.g., the supporting structure 310 of FIG. 4B) in the housing 230.

For example, the first encloser 510 and the second encloser 520 may be referred to as a portion of the housing 230. For example, in case that the electronic device 200 includes the speaker 320 disposed in the structure of the housing 230, the first encloser 510 and the second encloser 520 may be referred to as a portion of a supporting structure (e.g., the supporting structure 310 of FIG. 4B) in the housing 230. In the above-described case, the structure of the first encloser 510 and/or the second encloser 520 may indicate a structure of the supporting structure 310 in the housing 230.

According to an embodiment, the speaker module 500 may be disposed in a housing (e.g., the housing 230 of FIG. 2). The electronic device 200 may further include a supporting portion (e.g., the supporting portion 243 of FIG. 3) capable of supporting or accommodating at least one component included in the electronic device 200. The supporting portion 243 may be referred to as a bracket. However, it is not limited thereto. For example, the supporting portion 243 may be referred to as the mechanical structure 290 of FIG. 4B or a portion of the mechanical structure 290.

According to an embodiment, the first encloser 510 may be disposed in the supporting portion 243. For example, the supporting portion 243 may include seating portions (e.g., the seating portion 311 of FIG. 4B) in which components (e.g., the speaker module 500) included in the electronic device 200 may be seated, and the first encloser 510 may be disposed in any one of the seating portions.

Referring to FIG. 5B, the first encloser 510 may include a seating portion 511. For example, a shape of the seating portion 511 may correspond to a shape of the speaker 320, and the speaker 320 may be inserted into the seating portion 511. The seating portion 511 may include a through hole 513. The through hole 513 may be connected to a duct 515 connected to a speaker hole (e.g., the speaker hole 207 of FIG. 2). For example, the first encloser 510 may include a protrusion 514 extending from the seating portion 511 toward the speaker hole 207. The protrusion 514 may include the duct 515 that provides a transmission path of an audio signal outputted from the speaker 320. The duct 515 may spatially connect the through hole 513 and the speaker hole 207. The audio signal outputted from the speaker 320 may be transmitted to the duct 515 via the through hole 513. After passing through the duct 515, the audio signal may be transmitted to the outside of the electronic device 200 through an opening 516 formed at an end portion of the duct 515 and the speaker hole 207 connected to the opening 516.

For example, in case that the first encloser 510 and the second encloser 520 are a portion of the housing 230, components of the first encloser 510 may be referred to as components of the supporting structure 310 of FIG. 4B. For example, the seating portion 511, the through hole 513, the protrusion 514, and the duct 515 of FIG. 5C may be referred to as the seating portion 311, a through hole 313, the protrusion 314, and the duct 314 of FIG. 4b, respectively. However, it is not limited thereto.

Referring to FIG. 5C, the second encloser 520 may be coupled to the first encloser 510 to form a resonance space for the audio signal outputted from the speaker 320. The audio signal outputted from the speaker 320 may resonate in the resonance space formed by the first encloser 510 and the second encloser 520.

According to an embodiment, at least a portion of a support 350 may be disposed on the second encloser 520. The support 350 may include a first portion 351 contacted with another surface 320b of the speaker 320 and a second portion 353 fixed to the second encloser 520. For example, a portion of an end portion of the second portion 353 may be inserted into the second encloser 520. The first portion 351 may be indented from the second portion 353 toward a first direction (e.g., a +z direction) in which the speaker 320 is disposed. According to an embodiment, when the support 350 is viewed from above (e.g., in the +z direction), the second portion 353 may be disposed to surround peripheries of the first portion 351. As the first portion 351 is indented from the second portion 353, the support 350 may include a stepped portion 355 between the first portion 351 and the second portion 353. A first space S1 may be formed by the stepped portion 355 between the first portion 351 and the second portion 353.

According to an embodiment, a sealing sheet 360 may cover the first portion 351. For example, the sealing sheet 360 may be supported by the second portion 353 and disposed on the first portion 351. The first space S1 may be surrounded by the first portion 351, the stepped portion 353, and the sealing sheet 360. The second space S2 may at least partially surround the other surface 320b of the speaker 320. For example, the second space S2 may be a space between the other surface 320b and the second portion 353. The first space S1 may be connected to the second space S2 to expand the resonance space for the audio signal. For example, the support 350 may include at least one hole 356 connecting the first space S1 and the second space S2. The first space S1 may be spatially connected to the second space S2 via at least one hole 356. According to an embodiment, since the first space S1 may be formed by a positional difference with respect to the z-axis of the first portion 351 and the second portion 353 of the support 350, the first space S1 and the second space S2 may form the resonance space. According to an embodiment, the speaker module 500 may secure the resonance space for the audio signal outputted from the speaker 320 by a volume of the first space S1 and a volume of the second space S2.

According to an embodiment, the speaker module 500 may include the sealing sheet 360 disposed on the support 350 to cover the first space S1. The sealing sheet 360 may cover the first space S1. The sealing sheet 360 may isolate a space inside the speaker module 500 and the outside of the speaker module 500. For example, as the sealing sheet 360 is disposed in a -z direction of the first space S1, the first space S1 and the second space S2 may be isolated from the external space of the speaker module 500. The sealing sheet 360 may overlap the first space S1 when the speaker module 500 is viewed from above (e.g., in the +z direction). In order to cover the first space S1, an area of the sealing sheet 360 may be larger than an area of the first space S1. The first space S1 may be sealed by the sealing sheet 360 to reduce or prevent leakage of the audio signal transmitted from the speaker 320. A resonance space for the audio signal may be formed by the first encloser 510, the second encloser 520, and the sealing sheet 360. For example, in case that a support is formed as an integral structure filling a space between the other surface of the speaker and the sealing sheet, the resonance space may be reduced as much as the space occupied by the support. According to an embodiment, the support 350 may be configured to provide the first space S1. Since the support 350 includes at least one hole 356, the speaker module 500 may provide the first space S1 and the second space S2 as the resonance space.

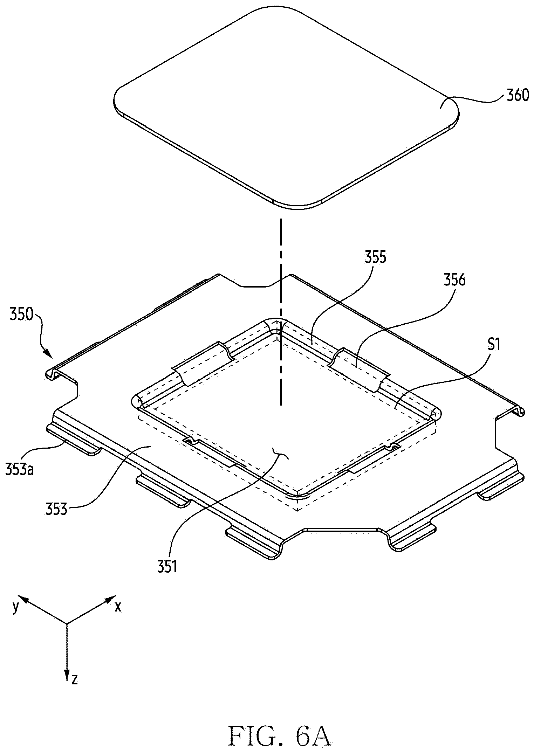

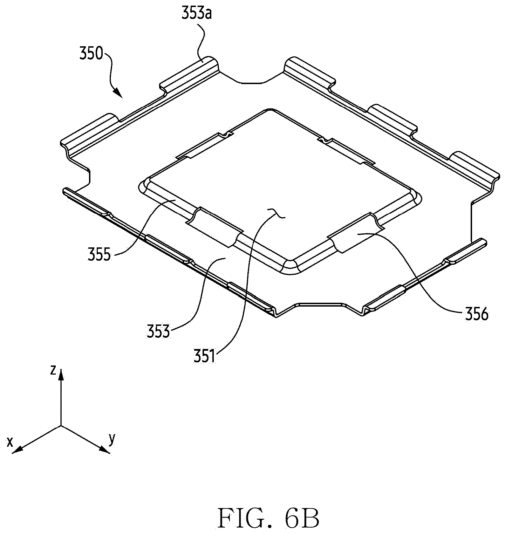

FIG. 6A is a diagram illustrating a support and a sheet according to an embodiment. FIG. 6B is a diagram illustrating a rear surface of a support according to an embodiment.

Referring to FIGS. 6A and 6B, a support 350 may include a first portion 351 contacted with another surface 320b of a speaker 320 to press the speaker 320, a second portion 353 spaced apart from the first portion 351, and a stepped portion 355 connecting the first portion 351 and the second portion 353. According to an embodiment, a first space S1 may be surrounded by the first portion 351, the stepped portion 355, and a sealing sheet 360.

According to an embodiment, the first portion 351 may be contacted with the other surface 320b of the speaker 320 to press the speaker 320. According to an embodiment, the support 350 may be configured to press the speaker 320 toward a seating portion (e.g., the seating portion 311 of FIG. 4B) in a state in which a first plate (e.g., the first plate 202 of FIG. 4B), a second plate (e.g., the second plate 211 of FIG. 4B), and a frame structure (e.g., the frame structure 240 of FIG. 4B) that constitute a housing (e.g., the housing 230 of FIG. 4B) are coupled to each other. For example, when a second plate 211 is coupled to the frame structure 240, the support 350 may receive a force from the second plate 211 in a direction (e.g., a +z direction) toward the first plate 202 by bonding force between the second plate 211 and the frame structure 240. By the force, the first portion 351 contacted with the speaker 320 may press the other surface 320b facing the second plate 211 of the speaker 320, and a surface 320a of the speaker 320 may be firmly contacted with the supporting structure 310.

According to an embodiment, the second portion 353 may be spaced apart from the first portion 351. For example, the second portion 353 may be spaced apart from the first portion 351 in a direction (e.g., a -z direction) toward a second surface (e.g., the second surface 200B of FIG. 4B). The first portion 351 and the second portion 353 may be disposed at different positions with respect to a direction (e.g., the -z direction) toward the second surface 200B. The second portion 353 may be connected to a supporting structure (e.g., the supporting structure 310 of FIG. 4B) in order to fix the support 350. For example, a portion 353a of an end portion of the second portion 353 may be inserted into the supporting structure 310 to fix the support 350 to the supporting structure 310. A force pressing the speaker 320 may be transmitted from the second portion 353 connected to the supporting structure 330 to the first portion 351.

According to an embodiment, the second portion 353 may be disposed to surround peripheries of the first portion 351. As the second portion 353 surrounds the peripheries of the first portion 351, the second portion 353 may evenly transmit the force pressing the speaker 320 to an entire area of the first portion 351. For example, a shape of the first portion 351 may be a rectangle as a whole, and a shape of the second portion 352 may be a shape surrounding corners of the rectangle. However, it is not limited thereto. As the peripheries of the first portion 351 is connected to the second portion 353 via the stepped portion 355, the first portion 351 may be firmly fixed in a state of contacting with the speaker 320.

According to an embodiment, the stepped portion 355 may connect the first portion 351 and the second portion 353. Since the first portion 351 and the second portion 353 are disposed at the different positions with respect to a direction (e.g., the -z direction)toward the second surface 200B, a step may be formed between the first portion 351 and the second portion 353. As the stepped portion 355 connects the first portion 351 and the second portion 353, the first portion 351 and the second portion 353 disposed at the different positions may be integrally formed. The force provided from the second portion 353 to the first portion 351 may be transmitted via the stepped portion 355.

According to an embodiment, the stepped portion 355 may include at least one hole 356 connecting a first space (e.g., the first space S1 of FIG. 4B) and a second space (e.g., the second space S2 of FIG. 4B). For example, as illustrated in FIG. 6A, the first space S1 may be referred to as a space surrounded by the first portion 351, the stepped portion 355, and the sealing sheet 360. For example, referring to FIG. 6B, the second space S2 may include a space between the first portion 351 and the second portion 355, formed by the stepped portion 355. For example, the at least one hole 356 may include a plurality of holes spaced apart from each other along a circumference of the stepped portion 355. The first space S1 and the second space S2 may be spatially connected to each other via the at least one hole 356 disposed in the stepped portion 355. The audio signal outputted from the speaker 320 may resonate in the first space S1 and the second space S2 connected to the first space S1.

According to an embodiment, the stepped portion 355 may extend from peripheries of the first portion 351 to have an incline with respect to the first portion 351. In case that the stepped portion 355 has an incline with respect to the first portion 351, an area of the at least one hole 356 disposed in the stepped portion 355 may be easily secured. For example, in order for the first space S1 and the second space S2 to be spatially connected to each other, the at least one hole 356 having a certain area or more may be required. The area of at least one hole 356 may be required to be an area sufficient for the vibration of the audio signal outputted from the speaker 320 to be transmitted from the first space S1 to the second space S2. In case that a length of the at least one hole 356 is increased to increase the area of the at least one hole 356, rigidity of the support 350 may be weakened. In case that the rigidity of the support 350 is weak, the stepped portion 355 may be damaged by a force transmitted from the second plate 211. When the length of the at least one hole 356 is constant, an area of the at least one hole 356 when the stepped portion 355 extends from the peripheries of the first portion 351 to have an incline with respect to the first portion 351 may be larger than an area of the at least one hole 356 when the stepped portion 355 extends vertically with respect to the first portion 351 from the peripheries of the first portion 351. When the stepped portion 355 has the incline with respect to the first portion 351, the area of the at least one hole 356 may be sufficiently secured within a certain length, and thus a spatial connection between the first space S1 and the second space S2 may be facilitated. According to an embodiment, although the length of the at least one hole 356 is formed relatively short, the area of the at least one hole 356 for connecting the first space S1 and the second space S2 may be secured, and thus the rigidity of the support 350 may be improved.

According to an embodiment, the sealing sheet 360 may cover the first space S1. Referring to FIG. 6A, the peripheries of the sealing sheet 360 may cover an end portion of the -z direction of the first space S1 by being disposed in the second portion 353. The extent of the sealing sheet 360 may be larger than the extent of the end of the -z direction of the first space S1 to cover the first space S1. The sealing sheet 360 may have an area sufficient to cover the first portion 351 and the at least one hole 356. According to an embodiment, the first space S1 may be separated from another space in the housing 230 by the sheet 360.

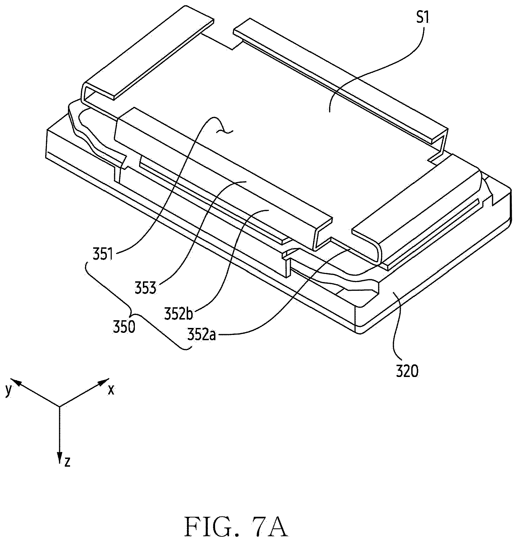

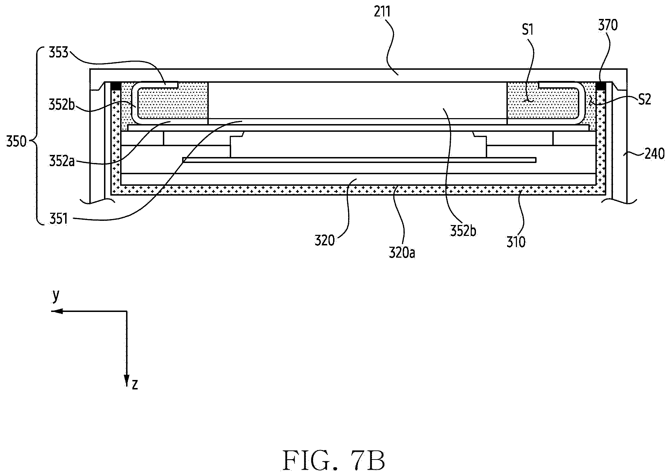

FIG. 7A is a diagram illustrating an example of a speaker and a support according to an embodiment. FIG. 7B is a diagram illustrating a side surface of the speaker and the support of FIG. 7A.

Referring to FIGS. 7A and 7B, the support 350 may include a first portion 351 that is in contact with a speaker 320 to press the speaker 320 and includes an indentation portion 352a indented from a corner toward a center, a plurality of side walls 352b extending from a portion of peripheries of the first portion 351 toward a second surface (e.g., the second surface 200B of FIG. 4B), and a second portion 353 that is bent from the plurality of side walls 352b and extends parallel to the second surface 200B. According to an embodiment, a first space S1 may be surrounded by the first portion 351, the plurality of side walls 352b, and the second portion 353. A second plate 211 may be disposed in a -z direction of the second portion 353.

According to an embodiment, the first portion 351 may be contacted with the speaker 320 to press the speaker 320. The first portion 351 may include the indentation portion 352a indented toward the center from the corner. Referring to FIG. 7A, the indentation portion 352a may be indented from four corners of the first portion 351 toward the center of the first portion 351, but is not limited thereto.

According to an embodiment, the plurality of side walls 352b may extend from a portion of the peripheries of the first portion 351 toward the second surface 200B. For example, the plurality of side walls 352b may extend from a portion of the peripheries of the first portion 351 in a direction (e.g., the -z direction) toward the second surface 200B. A portion of the plurality of peripheries may mean peripheries that do not form the indentation portion 352a among the peripheries of the first portion 351. The indentation portion 352a may be formed by at least a portion of remaining peripheries of the first portion 351 that are not connected to the plurality of side walls 352b.

According to an embodiment, the second portion 353 may be bent from the plurality of side walls 352b and extend parallel to the second surface 200B. For example, the second portion 353 may be bent toward a point spaced apart from a center of the first portion 351 in the direction (e.g., the -z direction) toward the second surface 200B. The second portion 353 bent toward the point may not be in contact with each other. The second plate 211 may be disposed in the -z direction of the plurality of second portions 353. A side surface of the first space S1 in the -z direction may be covered by the second plate 211. According to an embodiment, a supporting structure 310 may support a surface 320a of the speaker 320. A second space S2 between the supporting structure 310 and the second plate 211 may surround the speaker 320. A sealing member 370 may be disposed between the supporting structure 310 and the second plate 211. The sealing member 370 may seal the second space S2 between the second plate 211 and the supporting structure 310.

When the speaker 320 and the support 350 are disposed in the housing 230, the second portion 353 may be pressed by bonding force between the second plate 211 and a frame structure 240. A force provided from the second plate 211 to the frame structure 240 may be transmitted to the first portion 351 via the plurality of side walls 352b. The support 350 may be configured to press the speaker 320 in a +z direction by the force. According to an embodiment, since the first portion 351 may be contacted with a surface of the speaker 320 in a remaining portion except for the indentation portion 352a, an area of pressing the speaker 320 may be increased.

According to an embodiment, the plurality of side walls 352b may be spaced apart from each other by the indentation portion 352a. The plurality of side walls 352b may extend from peripheries that do not form the indentation portion 352a among the plurality of peripheries of the first portion 351, and the indentation portion 352a may be disposed between the plurality of side walls 352b. The plurality of side walls 352b may be spaced apart from each other by the indentation portion 352a, and the first space S1 may be connected to the second space S2 via a gap between the plurality of side walls 352b. For example, the audio signal outputted from the speaker 320 may resonate in the first space S1 and the second space S2 connected to the first space S1 via the indentation portion 352a.

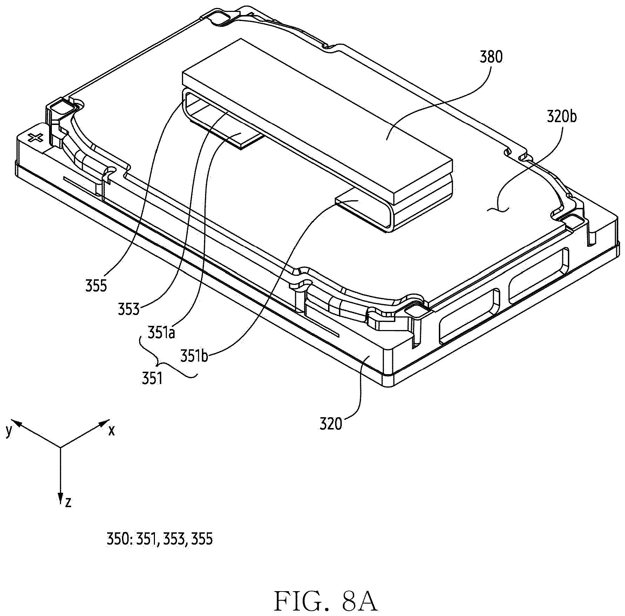

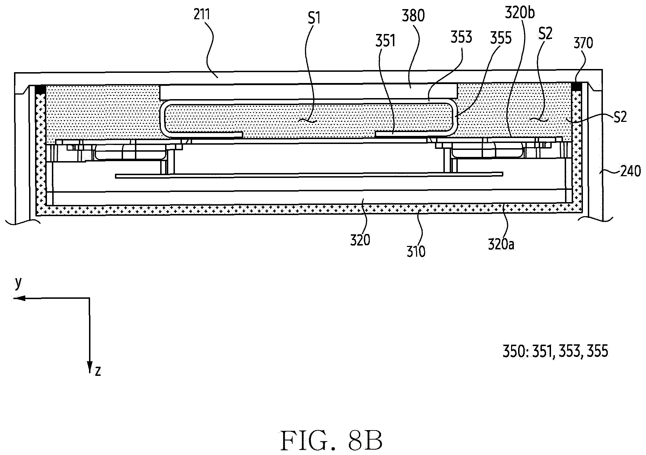

FIG. 8A is a diagram illustrating an example of a speaker, a support, and an elastic body according to an embodiment. FIG. 8B is a diagram illustrating side surfaces of the speaker, the support, and the elastic body of FIG. 8A.

Referring to FIGS. 8A and 8B, a support 350 may include a first portion 351 contacted with another surface 320b of a speaker 320 to press the speaker 320, a second portion 353 spaced apart from the first portion 351 and facing the first portion 351, and a stepped portion 355 connecting the first portion 351 and the second portion 353. An electronic device (e.g., the electronic device 200 of FIG. 4A) according to an embodiment may further include an elastic body 380 disposed on the second portion 353 between the support 350 and a second plate 211, and configured to press the support 350. According to an embodiment, a first space S1 may be surrounded by the first portion 351, the second portion 353, and the stepped portion 355. According to an embodiment, the supporting structure 310 may support a surface 320a of the speaker 320. A second space S2 between the supporting structure 310 and the second plate 211 may surround the speaker 320. A sealing member 370 may be disposed between the supporting structure 310 and the second plate 211. The sealing member 370 may seal the second space S2 between the second plate 211 and the supporting structure 310.

According to an embodiment, the second portion 353 may be spaced apart from the first portion 351. For example, the second portion 353 may be spaced apart from the first portion 351 in a first direction (e.g., a -z direction) toward which the other surface 320b of the speaker 320 faces. The second portion 353 may be disposed in parallel to the second plate 211 between the second plate 211 and the speaker 320. The stepped portion 355 may connect the first portion 351 and the second portion 353. Referring to FIG. 8A, the stepped portion 355 may extend from both end portions of the second portion 353 in a second direction (e.g., a +z direction) opposite to the first direction, and be connected to the first portion 351. The first portion 351 may include a portion 351a adjacent to an end portion of the second portion 353 and a portion 351b adjacent to another end portion of the second portion 353. The portions 351a and 351b may be spaced apart from each other. According to an embodiment, since the stepped portion 355 connect both end portions of the second portion 353 and the first portion 351, a side surface of the support 350 may be opened. The first space S1 formed between the first portion 351 and the second portion 353 may be connected to the second space S2 surrounding the other surface 320b of the speaker 320 via the opened side surface. Since the support 350 is configured in a structure forming the first space S1, the first space S1 and the second space S2 may form a resonance space for an audio signal outputted from the speaker 320. According to an embodiment, the audio signal outputted from the speaker 320 may resonate in the first space S1 and the second space S2 connected to each other.

According to an embodiment, the elastic body 380 may be disposed on the support 350. For example, the elastic body 380 may be disposed on the second portion 353 and may have a shape corresponding to a shape of the second portion 353. The elastic body 380 may be made of a material having flexibility. For example, the elastic body 380 may include rubber, silicon, sponge, and/or poron, but is not limited thereto. The elastic body 380 may be disposed between the second plate 211 and the support 350. The elastic body 380 may be configured to press the second portion 353 of the support 350 by bonding force between the second plate 211 and a frame structure 240. The elastic body 380 may be fixed on the second portion 353 of the support 350. The elastic body 380 may prevent the support 350 from colliding with the second plate 211 by the audio signal outputted from the speaker 320.

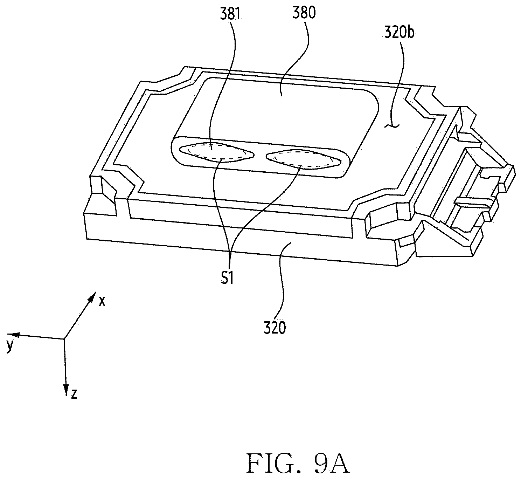

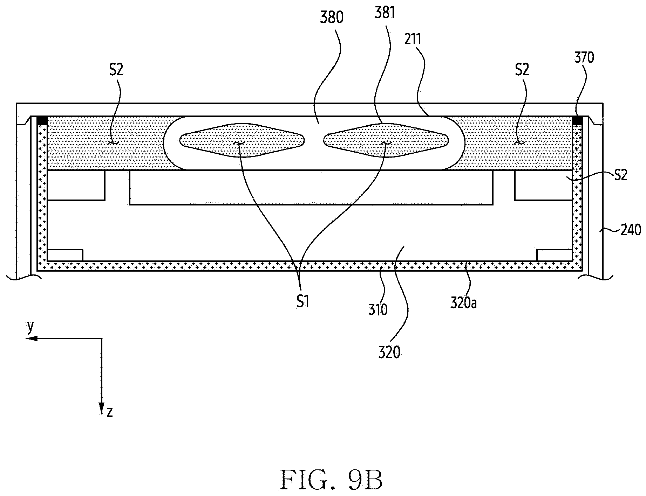

FIG. 9A is a diagram illustrating an example of a speaker and an elastic body according to an embodiment. FIG. 9B is a diagram illustrating a side surface of the speaker and the elastic body of FIG. 9A.

Referring to FIGS. 9A and 9B, an electronic device (e.g., the electronic device 200 of FIG. 4A) according to an embodiment may include an elastic body 380 including at least one hollow 381 connected to a second space (e.g., the second space S2 of FIG. 5C) surrounding another surface 320b of a speaker 320. The elastic body 380 may be disposed between a second plate 211 and the speaker 320. The elastic body 380 may be made of a material having flexibility. For example, the elastic body 380 may include rubber, silicon, sponge, and/or poron, but is not limited thereto.

According to an embodiment, the elastic body 380 may be configured to press the speaker 320 by the second plate 211. A side surface of the elastic body 380 in a +z direction may be contacted with a surface of the speaker 320, and a side surface of the elastic body 380 in a -z direction may be contacted with the second plate 211. By bonding force between the second plate 211 and a frame structure 240, the elastic body 380 may be configured to press the speaker 320 in the +z direction. The speaker 320 may be firmly fixed to a seating portion 311 by being pressed by the elastic body 380.

According to an embodiment, a shape of the elastic body 380 may be deformed according to a size of a space between the second plate 211 and the speaker 320. For example, in case that the size of the space between the second plate 211 and the speaker 320 is small, as the second plate 211 may press the elastic body 380 in the +z direction, a length of the elastic body 380 in the z direction may be reduced. When the elastic body 380 is pressed, a cross-section of at least one hollow 381 may be reduced. For example, in case that the space between the second plate 211 and the speaker 320 is large, the shape of the elastic body 380 may be restored. When a length of the elastic body 380 in the z direction is increased, the cross-section of the at least one hollow 381 may be increased.

According to an embodiment, the at least one hollow 381 may form a first space S1. The at least one hollow 381 may be connected to a second space (e.g., the second space S2 of FIG. 4B), which is an outer space of the elastic body 380, to form a portion of a resonance space. As the elastic body 380 includes at least one hollow 381, a volume of the resonance space may be expanded by a volume of the at least one hollow 381. According to an embodiment, a supporting structure 310 may support a surface 320a of the speaker 320. The second space S2 between the supporting structure 310 and the second plate 211 may surround the speaker 320. A sealing member 370 may be disposed between the supporting structure 310 and the second plate 211. The sealing member 370 may seal the second space S2 between the second plate 211 and the supporting structure 310. The first space S1 formed in the hollow 381 and the second space S2 between the second plate 211 and the supporting structure 310 may be connected to each other. As an entire resonance space of an audio signal transmitted from the speaker 320 is expanded via the at least one hollow 381, quality of an audio signal in a low register may be improved.

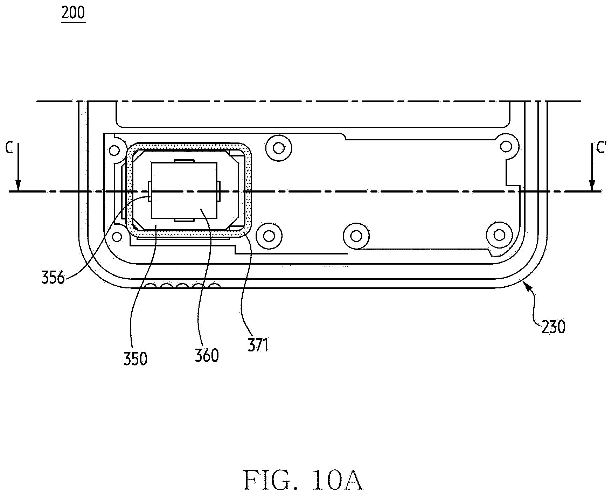

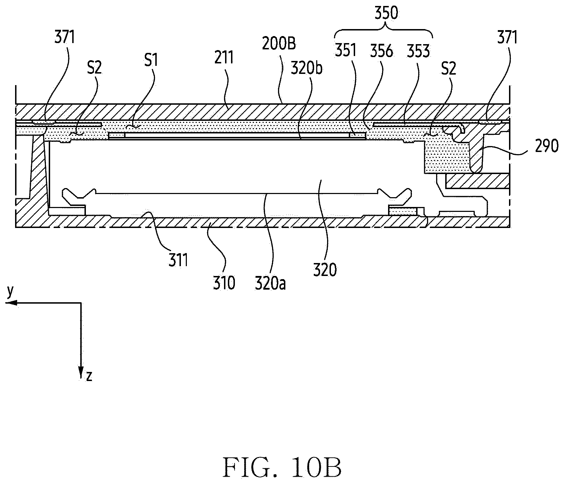

FIG. 10A is a diagram illustrating a portion of a rear surface of an electronic device according to an embodiment. FIG. 10B is a cross-sectional view of an electronic device, cut along line C-C' of FIG. 10A, according to an embodiment.

Referring to FIGS. 10A and 10B, an electronic device 200 according to an embodiment may include a first sealing member 371 disposed between a second plate 211 and a mechanical structure 290 of a housing 230. The first sealing member 371 may isolate a first space S1 between the second plate 211 and a first portion 351 and a second space S2 surrounding another surface 320b of a speaker 320 from a space in the housing 230.

According to an embodiment, the first space S1 and the second space S2 may be connected via at least one hole 356 formed in a stepped portion (e.g., the stepped portion 355 of FIG. 6A). According to an embodiment, an audio signal may be outputted to a surface 320a of the speaker 320. When the audio signal is outputted from the speaker 320, the audio signal may resonate in the first space S1 and the second space S2 connected to each other.

According to an embodiment, the first sealing member 371 may be disposed between the second plate 211 and a mechanical structure 290 of the housing 230. For example, the first sealing member 371 may be integrally formed with the second plate 211 and disposed on the mechanical structure 290 in the housing 230. In case that the first space S1 and the second space S2 are not sealed from the space in the housing 230, the audio signal outputted from the speaker 320 may resonate in the unsealed space. In case that a resonance space is not constant, the resonance of the audio signal may not be constant, and quality of the audio signal may be deteriorated. According to an embodiment, the first sealing member 371 may isolate the first space S1 and the second space S2 from the space in the housing 230. For example, the first sealing member 371 may occupy a region that connects the first space S1 and the second space S2 to the space in the housing 230. The audio signal outputted from the speaker 320 may resonate in the first space S1 and the second space S2 sealed from the space in the housing 230. The first sealing member 371 may be a sealing tape to easily attach and detach for ease of assembly with the mechanical structure 290 in the housing 230, but is not limited thereto.

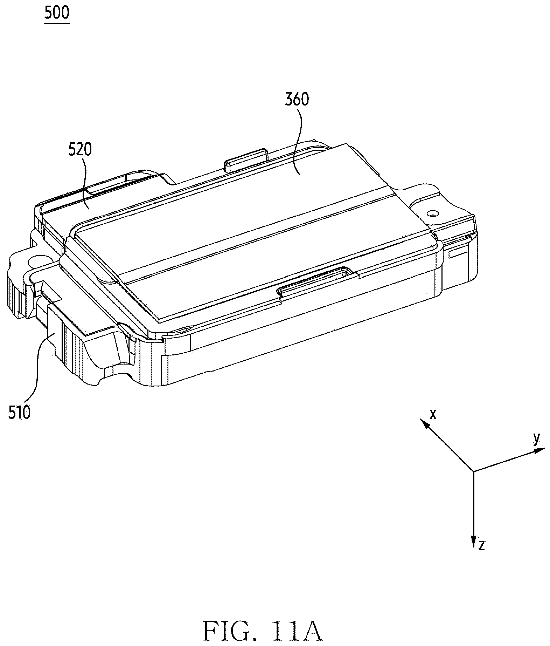

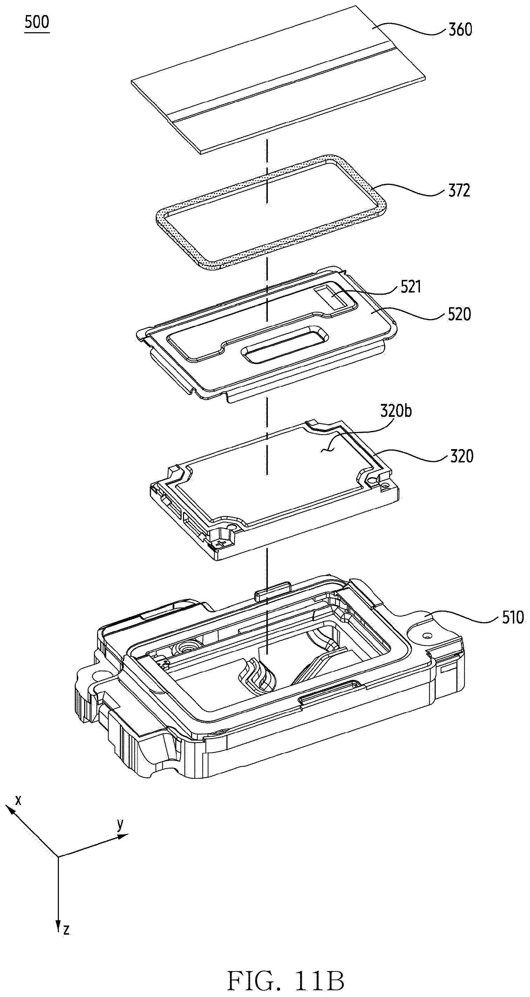

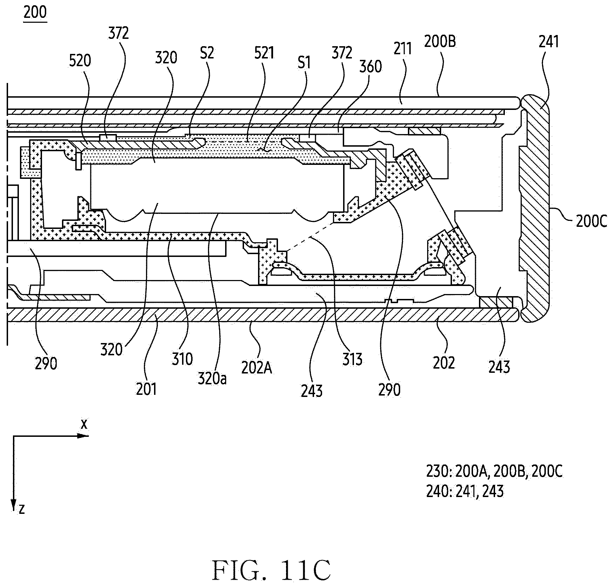

FIG. 11A is a diagram illustrating a speaker module of an electronic device according to an embodiment. FIG. 11B is an exploded perspective view of a portion of the speaker module of FIG. 11A. FIG. 11C is a cross-sectional view of the electronic device in which the speaker module of FIG. 11A is disposed, cut along line D-D' of FIG. 2.

Referring to FIGS. 11A to 11C, a speaker module 500 may include a first encloser 510, a speaker 320, a second encloser 520, a second sealing member 372, and a sealing sheet 360. The speaker module 500 may be disposed on a portion of a mechanical structure 290 forming a physical structure in a housing 230. For example, the mechanical structure 290 may be a portion of a supporting portion 243 extending from a side wall 241 forming a side surface 200C of the housing 230, but is not limited thereto. According to an embodiment, the first encloser 510 and the second encloser 520 may not be a portion integrally formed with the mechanical structure 290 of the housing 230, but may be a component separate from the mechanical structure 290 of the housing 230. The first encloser 510 and the second encloser 520 may be coupled to each other to form an encloser surrounding the speaker 320. The speaker 320 may be disposed in the first encloser 510. The second encloser 520 may be coupled to the first encloser 510 to cover the speaker 320.

Referring to FIG. 11B, the second encloser 520 may include an opening 521 exposing a portion of the speaker 320 on a surface facing a second surface (e.g., the second surface 200B of FIG. 11C). For example, a surface of the second encloser 520 facing a -z direction may include the opening 521. The first encloser 510 and the second encloser 520 may be coupled to each other, and form a resonance space for an audio signal outputted from another surface 320b of the speaker 320. The audio signal outputted from the speaker 320 may resonate in a first space S1 surrounding the other surface 320b of the space between the first encloser 510 and the second encloser 520.

According to an embodiment, in case that the first encloser 510 and the second encloser 520 are coupled to each other to form the first space S1 for the speaker 320, the first space S1 may be connected to the outside of the first encloser 510 and the second encloser 520 via the opening 521.

Referring to FIG. 11C, the first space S1 may be connected to a second space S2 between the sealing sheet 360 and the second encloser 520 via the opening 521. The audio signal outputted from the speaker 320 may resonate in the first space S1 and the second space S2 connected to each other via the opening 521.

An electronic device 200 according to an embodiment may include the second sealing member 372 disposed between the sealing sheet 360 and the second encloser 520. The second sealing member 372 may isolate the second space S2 connected to the first space S1 from another space via the opening 521. In case that the resonance space in which the audio signal resonates is not sealed, the audio signal transmitted from the speaker 320 may resonate in the unsealed space. In case that the resonance space is not constant, the resonance of the audio signal may not be constant, and quality of the audio signal may be deteriorated. As the second sealing member 372 seals the second space S2, the resonance space of the audio signal transmitted from the speaker 320 may be sealed. For example, a shape of the second sealing member 372 may be a ring shape extending along a circumference of the sealing sheet 360 and the second encloser 520 in order to include the opening 521 inside, but is not limited thereto. The second sealing member 372 may seal the second space S2 by surrounding the opening 521 disposed inside.

According to an embodiment, the second sealing member 372 may include a flexible material. For example, the second sealing member 372 may include rubber, silicon, sponge, and/or poron, but is not limited thereto. The second sealing member 372 may be compressed by bonding force between a second plate 211 and a frame structure 240. The second sealing member 372 may isolate the second space S2 from the other space in the housing 230 by being compressed by the bonding force.

According to an embodiment, for the resonance space for an audio signal, the first space S1 and the second space S2 may be connected to each other. For example, as an encloser of the speaker module includes an opening, the resonance space may be expanded, and thus quality of audio in a low register of the audio signal transmitted from the speaker 320 may be improved.

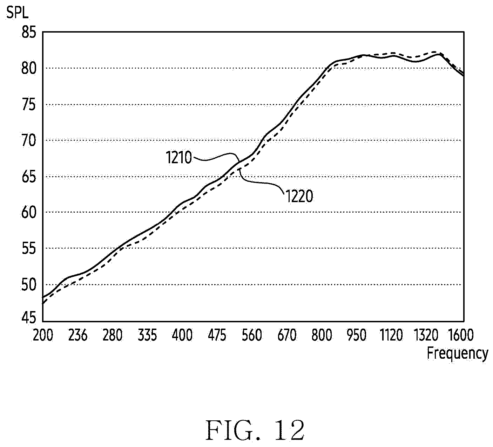

FIG. 12 is a graph indicating a change in an output sound pressure level of a speaker, in case that a resonance space is expanded. In FIG. 12 , a horizontal axis of the graph of is a frequency (unit : Hz), and a vertical axis of the graph is a sound pressure level (SPL) (unit : dB) of a speaker 320.

A first graph 1210 of FIG. 12 indicates an output sound pressure level of an audio signal in case that a first portion 351 and a second portion 353 of a support 350 are spaced apart from each other to form a second space S2, and in case that an audio signal transmitted from a speaker (e.g., the speaker 320 of FIG. 4B) resonates in a first space (e.g., the first space S1 of FIG. 4B) and a second space (e.g., the second space S2 of FIG. 4B) connected to each other. A second graph 1220 of FIG. 12 indicates the output sound pressure level of the audio signal in case that the audio signal transmitted from the speaker 320 resonates only in the second space S2. A volume of the first space S1 may be approximately 0.04 cc, and a volume of the second space S2 may be approximately 0.49 cc.

Referring to FIG. 12, in a register where a frequency is low, the first graph 1210 may have a greater SPL than the second graph 1220. In a frequency range of approximately 950 Hz or less, the first graph 1210 may have a SPL greater than the second graph 1220. Referring to the first graph 1210 and the second graph 1220, the SPL may be increased by approximately 0.6 dB in the frequency range of approximately 950 Hz or less. In case that the first space S1 and the second space S2 are connected, since the output sound pressure level of the speaker 320 is high, quality of the audio signal transmitted from the speaker 320 may be improved. For example, in case that the support for pressing the speaker does not include the first portion and second portion spaced apart from each other, since only the second space S2 is used as a resonance space, quality of the audio signal provided from the speaker may deteriorate. According to an embodiment, since the support 350 includes the first portion 351 and the second portion 353 spaced apart from each other, the first space S1 may be formed. The first space S1 may be connected to the second space S2 to provide the resonance space for an audio signal. An electronic device 200 according to an embodiment may improve quality of the audio signal in a relatively low register via a simple structure.

An electronic device (e.g., the electronic device 200 of FIG. 4A) according to an embodiment may include a housing (e.g., the housing 230 of FIG. 4A), a supporting structure

(e.g., the supporting structure 310 of FIG. 4B), a speaker (e.g., the speaker 320 of FIG. 4B), a support (e.g., the support 350 of FIG. 4B), and a sealing sheet (e.g., the sealing sheet 360 of FIG. 4B). The housing may include a first surface (e.g., the first surface 200A of FIG. 2), a second surface (e.g., the second surface 200B of FIG. 4B) opposite to the first surface, and a third surface (e.g., the third surface 200C of FIG. 2) between the first surface and the second surface. The supporting structure may be spaced apart from the first surface. The speaker may include a surface (e.g., the surface 320a of FIG. 4B) and another surface (e.g., the other surface 320b of FIG. 4B). The surface may be at least partially contacted with a portion (e.g., the seating portion 311 of FIG. 4B) of the supporting structure. The other surface may be opposite to the surface of the speaker. The support may be contacted with a portion of the other surface of the speaker. The sealing sheet may be interposed between the support and the second surface of the housing. The support may include a first portion (e.g., the first portion 351 of FIG. 4B) and a second portion (e.g., the second portion 352 of FIG. 4B). The first portion may be contacted with the other surface of the speaker. The first portion may be spaced apart from the sealing sheet. The second portion may be contacted with the sealing sheet. The second portion may be spaced apart from the other surface of the speaker. A first space (e.g., the first space S1 of FIG. 4B) between the sealing sheet and the first portion of the support may be connected to a second space (e.g., the second space S2 of FIG. 4B) between the other surface of the speaker and the second portion of the support, for a resonant space for audio signals transmitted from the surface of the speaker toward a speaker hole of the third surface of the housing, via a through hole of the supporting structure arranged with respect to the surface of the speaker.

According to an embodiment, the housing may include a first plate (e.g., the first plate 202 of FIG. 4B), a second plate (e.g., the second plate 211 of FIG. 4B), and a frame structure (e.g., the frame structure 240 of FIG. 4B). The first plate may form the first surface. The second plate may form the second surface. The frame structure may form the third surface between the first surface and the second surface. The first supporting structure may be formed integrally with the frame structure. The first supporting structure may extend from the frame structure into the housing.

According to an embodiment, the first plate and the second plate may be coupled to the frame structure.

According to an embodiment, the support may press the other surface of the speaker by bonding force between the second plate and the frame structure.

According to an embodiment, the second space may be surrounded by a mechanical structure of the housing and the supporting structure.

According to an embodiment, a portion (e.g., the portion 353a of FIG. 6A) of an end portion of the second portion may fix the support by being inserted into the mechanical structure of the housing.

The electronic device according to an embodiment may include a bracket (e.g., the supporting portion 243 of FIG. 3). The bracket may be disposed in the housing. The bracket may support at least one component of the electronic device. The supporting structure may be disposed on the bracket.

According to one embodiment, the support may include a stepped portion (e.g., the stepped portion 355 of FIG. 6A). The stepped portion may connect the first portion of the support. The first space may be surrounded by the first portion of the support, the stepped portion and the sealing sheet.

According to one embodiment, the stepped portion may include at least one hole (e.g., at least one hole 356 of FIG. 6A). The at least one hole may connect the first space and the second space.

According to an embodiment, the stepped portion may extend from peripheries of the first portion to have an incline with respect to the first portion.

According to an embodiment, when the support is viewed in a direction (e.g., the +z direction of FIG. 6A) from the second surface toward the first surface, the second portion of the support may surround peripheries of the first portion of the support.

According to an embodiment, the support (e.g., the support 350 of FIG. 7A) may include an indentation portion (e.g., the indentation portion 352a of FIG. 7A) and a plurality of side walls (e.g., the plurality of side walls 352b of FIG. 7A). The indentation portion may be indented from a corner of the first portion toward a center of the first portion. The plurality of side walls may extend from a portion of peripheries of the first portion toward the second surface of the housing. The second portion of the support may extend, by being bent from the plurality of side walls, parallel to the second surface of the housing. The first space may be surrounded by the first portion of the support, the plurality of side walls, and the second portion of the support.

According to an embodiment, the plurality of side walls may be spaced apart from each other by the indentation portion. the first space may be connected to the second space via a gap between the plurality of side walls.

According to an embodiment, the supporting structure may include a seating portion. The speaker may be disposed in the seating portion. The through hole may be disposed in the seating portion.

An electronic device according to an embodiment may include an elastic body (e.g., the elastic body 380 of FIG. 8A). The elastic body may be disposed between a support (e.g., the support 350 of FIG. 8A) and a supporting structure. The elastic body may be configured to press the support. The elastic body may be disposed on a second portion.

An electronic device according to an embodiment may include a housing, a speaker module (e.g., the speaker module 500 of FIG. 5A), and a sealing sheet. The housing may include a first plate, a second plate, and a frame structure. The second plate may be opposite to the first plate. The frame structure may include a side wall and a supporting portion. The side wall may be disposed between the first plate and the second plate. The supporting portion may extend from the side wall. The speaker module may be disposed between the second plate and the supporting portion, on the supporting portion. The sealing sheet may seal a space between the speaker module and a mechanical structure of the housing. The speaker module may include a first encloser (e.g., the first encloser 510 of FIG. 5A), a speaker, and a second encloser (e.g., the second encloser 520 of FIG. 5A). The first encloser may be disposed on the supporting portion. The speaker may include a surface and another surface. The surface may partially contact a portion of the first encloser. The other surface may be opposite to the surface. The second encloser may be coupled to the first encloser. The second encloser may be disposed between the first encloser and the second plate to form a first space surrounding the other surface of the speaker. The second encloser may include an opening (e.g., the opening 516 of FIG. 5C) exposing the first space. The first space may be connected to a second space surrounded by the second encloser, the mechanical structure, and a sealing member for a resonance space for an audio signal outputted from the speaker.

According to an embodiment, the first encloser may include a duct (e.g., the duct 515 of FIG. 5C). The duct may extend to a speaker hole of the housing.

According to an embodiment, the first encloser may include a through hole (e.g., the through hole 513 of FIG. 5B). The through hole may be arranged for the surface so that the audio signal outputted from the surface of the speaker is transmitted to the duct.

According to an embodiment, the sealing sheet may include a flexible material. The sealing sheet may be configured to be compressed by bonding force between the second plate and the frame structure.

According to an embodiment, the sealing sheet may surround the opening.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a first surface, a second surface opposite to the first surface, and a third surface between the first surface and the second surface;
a supporting structure spaced apart from the first surface;
a speaker including a surface at least partially contacted with a portion of the supporting structure and another surface opposite to the surface of the speaker;
a support contacted with a portion of the other surface of the speaker; and
a sealing sheet interposed between the support and the second surface of the housing,
wherein the support includes:
a first portion, contacted with the other surface of the speaker, spaced apart from the sealing sheet, and
a second portion, contacted with the sealing sheet, spaced apart from the other surface of the speaker, and
wherein a first space, between the sealing sheet and the first portion of the support, is connected to a second space, between the other surface of the speaker and the second portion of the support, for a resonant space for audio signals transmitted from the surface of the speaker toward a speaker hole of the third surface of the housing, via a through hole of the supporting structure arranged with respect to the surface of the speaker.

2. The electronic device of claim 1,
wherein the housing further includes:
a first plate forming the first surface of the housing,
a second plate forming the second surface of the housing, and
a frame structure forming the third surface of the housing, and
wherein the supporting structure is formed integrally with the frame structure, and extends from the frame structure into the housing.

3. The electronic device of any one of claims 1 to 2,
wherein the first plate and the second plate are coupled to the frame structure.

4. The electronic device of any one of claims 1 to 3,
wherein the support presses the other surface of the speaker by bonding force between the second plate and the frame structure.

5. The electronic device of any one of claims 1 to 4,
wherein the second space is surrounded by a mechanical structure of the housing and the supporting structure.

6. The electronic device of any one of claims 1 to 5,
wherein a portion of an end portion of the second portion fixes the support by being inserted into the mechanical structure of the housing.

7. The electronic device of any one of claims 1 to 6, further comprising a bracket, disposed in the housing, supporting at least one component of the electronic device, and
wherein the supporting structure is disposed on the bracket.

8. The electronic device of any one of claims 1 to 7,
wherein the support includes a stepped portion connecting the first portion of the support and the second portion of the support, and
wherein the first space is surrounded by the first portion of the support, the stepped portion and the sealing sheet.

9. The electronic device of any one of claims 1 to 8, wherein the stepped portion includes at least one hole connecting the first space and the second space.

10. The electronic device of any one of claims 1 to 9,
wherein the stepped portion extends from peripheries of the first portion to have an incline with respect to the first portion.

11. The electronic device of any one of claims 1 to 10,
wherein the housing includes a mechanical structure disposed between the first surface of the housing and the second surface of the housing, and
wherein a portion of an end portion of the second portion fixes the support by being inserted into the mechanical structure of the housing.

12. The electronic device of any one of claims 1 to 11,
wherein, when the support is viewed in a direction from the second surface toward the first surface, the second portion of the support surrounds peripheries of the first portion of the support.

13. The electronic device of any one of claims 1 to 12,
wherein the support includes:
an indentation portion indented from a corner of the first portion toward a center of the first portion, and
a plurality of side walls extending from a portion of peripheries of the first portion toward the second surface of the housing,
wherein the second portion of the support, by being bent from the plurality of side walls, extends parallel to the second surface of the housing, and
wherein the first space is surrounded by the first portion of the support, the plurality of side walls, and the second portion of the support.

14. The electronic device of any one of claims 1 to 13,
wherein the plurality of side walls is spaced apart from each other by the indentation portion, and
wherein the first space is connected to the second space via gap between the plurality of side walls.

15. The electronic device of any one of claims 1 to 14,
wherein the supporting structure includes a seating portion on which the speaker is disposed, and
wherein the through hole is disposed in the seating portion.
